# EUROPÄISCHE PATENTSCHRIFT

(11) **EP 0 859 530 B1**
(45) Veröffentlichungstag und Bekanntmachung des Hinweises auf die Patenterteilung: **20.08.2003**
(21) Anmeldenummer: 98101311.3
(22) Anmeldetag: 26.01.1998
(51) Int. Cl.: H04Q 7/24

(54) **Integration von Mobilitäts-Funktionen eines schnurlosen Systems in leitungsgebundene Kommunikationsnetze**
Integration of mobility functions of a wireless system in wired communications networks
Intégration des fonctions de gestion de mobilité d'un système sans fil dans des réseaux de communications filaires

(30) Priorität: 14.02.1997 DE 19705774
(43) Veröffentlichungstag der Anmeldung: 19.08.1998
(73) Patentinhaber: SIEMENS AKTIENGESELLSCHAFT, 80333 München (DE)
(72) Erfinder: Galensa, Klaus, Boca Raton, FL 33431 (US); Morper, Hans-Jochen, 85253 Erdweg (DE); Rau, Helmut, 82110 Germering (DE); Ruckstuhl, Hanspeter, 80804 München (DE); Troch, Eddy, 2547 Lint (BE)

(56) Entgegenhaltungen:
- WO-A-95/26114
- WO-A-96/32820
- VON DER NEYEN H J ET AL: "IMPACT OF MOBILITY ON SWITCHING NETWORKS" PROCEEDINGS OF THE INTERNATIONAL SWITCHING SYMPOSIUM,JP,TOKYO, IEICE, Bd. SYMP. 14, 25. Oktober 1992 (1992-10-25), Seite 49-53 XP000337615

## Beschreibung

In zukünftigen leitungsgebundenen Kommunikationsnetzen sind Mobilitätsmanagement-Funktionen für schnurlos angeschlossene Kommunikationsendgeräte zu integrieren. Hierzu ist im Rahmen einer internationalen Standardisierung vorgeschlagen, die Mobilitätsmanagement-Funktionen durch ein intelligentes Netzwerk zu realisieren, das dem leitungsgebundenen Kommunikationsnetz hinzugefügt wird. In dem intelligenten Netzwerk sind alle erforderlichen Mobilitäts-Management-Funktionen in speziellen Service-Zentralen bzw. Servern realisiert, die an das drahtgebundene Kommunikationsnetz angeschlossen sind. Die Vermittlung der von drahtlosen Kommunikationsendgeräten initialisierten Verbindungen an die Service-Zentralen erfolgt durch das leitungsgebundene Kommunikationsnetz.

Des weiteren sind beispielsweise aus 'Mobilfunk und Intelligente Netze, Jacek Biala, S.57 bis 74, 1995, Viewig & Sohn Verlag, Mobilfunk-Netze, insbesondere das standardisierte GSM (Globale System for Mobile Communication)-Mobil-Funknetz, bekannt, bei dem in speziellen Mobilvermittlungsstellen (im Standard mit MSC) bezeichnet, Besucher- und Heimatregister (HLR,VLR) vorgesehen sind. In den Heimatregistern - in einem Mobilfunk-Kommunikationsnetz jeweils für einen Service-Bereich vorgesehen - sind für die zugeordneten Mobil-Kommunikationsendgeräte die Subskriptions-Informationen, Service Profiles (Leistungsmerkmalkonfiguration) und Service-Bereichs-individuelle Informationen (Location Informationen) gespeichert. Die Service-Bereichs-Informationen umfassen die in diesen Bereich enthaltenen Besucherregister. Die Besucherregister unterstützen die lokalen Mobilfunk-Kommunikationsendgeräte beim Verbindungsaufbau und stellen Zwischenspeicher für die temporäre Speicherung von teilnehmerindividuellen Informationen dar - üblicherweise Service Profile während eines Registrierungs-Prozesses. Das Besucherregister fordert insbesondere bei einer Registrierungsanforderung durch ein besuchendes Mobilfunk-Kommunikationsendgerät - d.h. ist in diesem Service-Bereich nicht registriert - die vorhergehend beschriebenen Informationen vom Heimatregister an. Die Besucherregister sind insbesondere in speziellen Mobilvermittlungsstellen und die Heimatregister in speziellen Service-Zentren angeordnet. Das leitungsgebundene Kommunikationsnetz dient als Zubringernetz für die Mobilvermittlungsstellen bzw. Service-Zentren.

Die der Erfindung zugrundeliegende Aufgabe ist darin zu sehen, die Mobilitäts-Management-Funktionen bzw. die Mobilität für schnurlos in leitungsgebundenen Kommunikationsnetze angeschlossene Kommunikationsendgeräte mit geringstem zusätzlichen Aufwand zu realisieren. Die Aufgabe wird durch die Merkmale des Anspruch 1 gelöst.

Der wesentliche Aspekt der Erfindung ist darin zu sehen, daß Besucher- und/oder Heimat-Datenbasen in leitungsgebundenen Kommunikationssystemen vorgesehen sind und Mobilitäts-Management-Informationen zwischen in unterschiedlichen Kommunikationssystemen vorgesehenen Besucher- bzw. Heimat-Datenbasen mit Hilfe eines Mobil-Protokolls ausgetauscht werden, wobei ein Kommunikationsnetz-Signalisierungs-Protokoll um das Mobil-Protokoll erweitert ist. In den Kommunikationssystemen werden die von den schnurlos angeschlossenen Kommunikationsendgeräten übermittelten Mobilitäts-Management-Informationen selektiert und diese bzw. die Mobilitäts-Informationen der Heimat- bzw. Besucher-Datenbasen mit Hilfe einer Interworking-Einheit an die Besucher- bzw. Heim-Datenbasis bzw. die Vermittlungssteuerung übermittelt, wobei die Anpassung der Mobilitäts-Management-Informationen hinsichtlich der Heimat- bzw. Besucher-Datenbasis-Architektur bzw. -Struktur in der Interworking-Einheit erfolgt. Des weiteren sind in den leitungsgebundenen Kommunikationssystemen implementierte Kommunikationsnetz-Service-Profiles der Besucher- bzw. Heimat-Datenbasis als Mobil-Service-Profiles dargestellt. Durch die Anordnung von Besucher- und Heimat-Datenbasen in leitungsgebundenen Kommunikationsnetzen ist die Mobilitäts-Funktion für schnurlos im Zubringernetz angeschlossene Kommunikationsendgeräte mit geringstem, zusätzlichen Aufwand realisierbar, insbesondere bei einer Ausgestaltung der Besucher- und Heimat-Datenbasis-Struktur gemäß dem GSM-Standard - Anspruch 2. Hierbei können die programmtechnisch realisierten Besucherund Heimat-Datenbasen mit geringsten Modifikationen übernommen werden - lediglich die Datenbasis-Inhalte ändern sich. Für die Konvertierung der von den GSM-Informationen unterschiedlichen Mobilitäts-Management-Informationen, insbesondere der Subskriptions-Daten und Service Profiles sind Interworking-Einheiten bzw. Service-Mapping-Routinen vorzusehen, die jedoch ohne Änderung der in den Kommunikationssystemen vorhandenen Programme implementiert werden können.

Nach einer vorteilhaften Ausgestaltung der Erfindung werden bei Verkehrsbeziehungen mit leitungsgebundenen Kommunikationsendgeräten des leitungsgebundenen Kommunikationsnetzes die übermittelten Service Profiles der Heimat- bzw. Besucher-Datenbasis mit GSM-gemäßer Service-Profile-Struktur dargestellt bzw. werden zumindest temporär gespeichert - Anspruch 3. Durch die Darstellung bzw. Anpassung können die in leitungsgebundenen Kommunikationssystemen verwendeten Service Profiles, d.h. Leistungsmerkmal-Profile, unverändert weiterbenutzt werden.

Bei einer weiteren vorteilhaften Ausgestaltung der Erfindung werden die Mobilitäts-Management-Informationen gemäß einem zwischen Kommunikationssystemen und einem Zubringernetz des leitungsgebundenen Kommunikationsnetzes abgestimmten Mobilitäts-Management-Protokoll gebildet und übermittelt - Anspruch 5. Derartige Protokolle sind zur Zeit in Standardisierungsgremien in Diskussion, wobei bei der Erfindung ein beliebiges Protokoll eingesetzt werden kann.

Gemäß einer Weiterbildung der Erfindung sind in der Heimat- bzw. Besucher-Datenbasis zumindest ein Teil von Subskriptions-Informationen sowie Service-Profiles und Session Key-Informationen zumindest temporär gespeichert, wobei die Dauer der Speicherung in der Besucher-Datenbasis von der Aufenthaltsdauer des schnurlos angeschlossenen Kommunikationsendgerätes in dem dieser Besucher-Datenbasis zugeordneten Service-Bereich abhängt - Anspruch 6. Dies bedeutet, daß bei einem Wechsel des Aufenthaltsbereichs des drahtlos angeschlossenen Kommunikationsendgerätes in einen anderen Aufenthaltsbereich die Mobilitäts-Management-Informationen nicht mehr in dem ursprünglichen sondern in der dem anderen Service-Bereich zugeordneten Besucher-Datenbasis gespeichert wird. Hierzu werden die Mobilitäts-Management-Informationen von der zuständigen Heimat-Datenbasis angefordert.

In Weiterbildung der Erfindung werden in den leitungsgebundenen Kommunikationssystemen (LE(H,V)) vorgesehene Service-Profiles der Besucher- bzw. Heimat-Datenbasis (BDB, HDB) Mobil-Service-Profile-strukturiert dargestellt und umgekehrt.

Weitere vorteilhafte Ausgestaltungen der Erfindung, insbesondere eine Anordnung zur Durchführung des erfindungsgemäßen Verfahrens, ist den weiteren Ansprüchen zu entnehmen.

Im folgenden wird das erfindungsgemäße Verfahren bzw. die erfindungsgemäße Anordnung anhand eines Blockschaltbildes und eines Ablaufdiagrammes näher erläutert. Dabei zeigen
- FIG 1: in einem Blockschaltbild erfindungsgemäß ausgestaltete Kommunikationssysteme eines leitungsbebundenen Kommunikationsnetzes und
- FIG 2: in einem Ablaufdiagramm eine Location Registration Prozedur mit den erfindungsgemäßen Kommunikationssystemen.

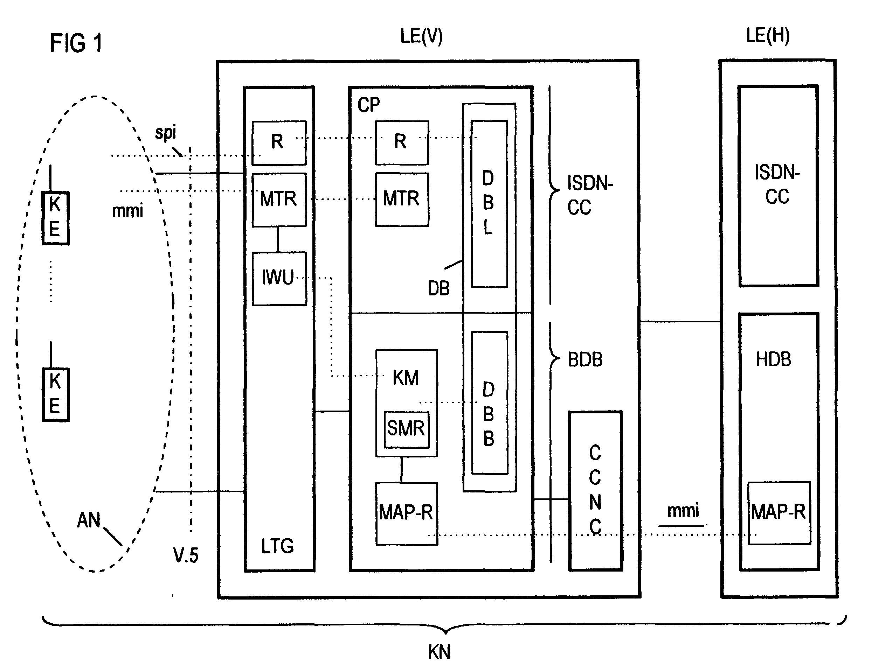

FIG 1 zeigt in einem Blockschaltbild zwei leitungsgebundene Kommunikationssysteme LE (H,V) eines leitungsgebundenen Kommunikationsnetzes KN, wobei beim Ausführungsbeispiel in einem Zubringernetz AN Kommunikationsendgeräte KE drahtlos bzw. schnurlos angeschlossen sind. Das Zubringernetz AN ist über PCM-orientierte Schnittstellen, beispielsweise die standardisierte V.5-Schnittstelle V.5, mit den Kommunikationssystemen LE verbunden - beim Kommunikationssystem LE(H) nicht dargestellt.

Des weiteren ist für das Ausführungsbeispiel angenommen, daß in einer der beiden Kommunikationssysteme LE(V) eine Besucher-Datenbasis (BDB) und in einem der Kommunikationssysteme LE(H) eine Heimat-Datenbasis (HDB) vorgesehen ist, wobei das Kommunikationssystem LE(H) mit der Heimat-Datenbasis (HDB) ebenfalls eine Besucher-Datenbasis (BDB) mit einem zugeordneten Zubringernetz AN mit schnurlos angeschlossenen Kommunikationsendgeräten KE aufweisen kann - jedoch nicht dargestellt.

In dem die Besucher-Datenbasis BDB aufweisenden Kommunikationssystem LE(V) ist die für den Anschluß des Zubringernetzes AN vorgesehene Schnittstelle, insbesondere die standardisierte V.5-Schnittstelle V.5, in den Leitungsanschlußbaugruppen LTG - im Blockschaltbild durch ein mit LTG bezeichnetes Rechteck angedeutet - realisiert. Diese Leitungsbaugruppen LTG sind mit einer zentralen Vermittlungssteuerung CP verbunden, wobei die Heimat- bzw. Besucher-Datenbasis HDB,BDB jeweils in Speichern der Vermittlungssteuerung CP zusammen mit der Datenbasis für das leitungsgebundene Kommunikationsnetz KN, insbesondere ein ISDN-Kommunikationsnetz, angeordnet ist. Für den Informationsaustausch zwischen den Kommunikationssystemen LE(H,V) des Kommunikationsnetzes KN sind Anschlußbaugruppen CCNC vorgesehen, durch die ein Zeichengabesystem, beim Ausführungsbeispiel das standardisierte Common Channel Signalling System No.7, realisiert ist. Dieses Zeichengabesystem ist für die Signalisierung zwischen leitungsgebundenen Fernsprech- und ISDN-Kommunikationsnetze vorgesehen.

Für die Realisierung der Mobilitäts-Funktion der in den Zubringernetzen AN drahtlos angeschlossenen Kommunikationsendgeräte KE sind zusätzliche Mobilitäts-Management-Informationen mmi vorgesehen, die sowohl zwischen den Kommunikationssystemen LE als auch zwischen diesen und den Zubringernetzen AN zu übermitteln und zu bilden bzw. zu bewerten sind. Zwischen den Kommunikationssystemen LE(H,V) ist ein für Mobilfunk-Netze vorgesehenes Signalisierungsprotokoll Mobil-Application-Protocoll (MAP) implementiert, das auf dem standardisierten ISDN-Signalisierungsprotokoll Nr.7 basiert und durch eine Mobilitäts-Routine MAP-R realisiert ist. Zwischen dem Zubringernetz AN und dem Kommunikationssystem LE(V) werden ebenfalls Mobilitäts-Management-Informationen mmi ausgetauscht, für die im Zubringernetz AN und in den Kommunikationssystemen LE jeweils eine Übermittlungsroutine in Form einer Mobil-Management-Routine MTR vorgesehen ist.

Da erfindungsgemäß die für das Mobilfunk-Netzwerk vorgesehene Zeichengabe "Mobility Application Protocoll" (MAP) sowie die Heimat- und Besucher-Datenbasis HDB,BDB unverändert in die leitungsgebundenen Kommunikationssysteme LE zu integrieren sind, ist für die Anpassung der Mobilitäts-Management-Informationen mmi im Zubringernetz AN an die Struktur der Mobilitäts-Management-Informationen mmi für Mobilfunk-Netzwerke eine Interworking-Einheit IWU vorgesehen.

Mit Hilfe der Interworking-Einheit IWU ist beispielsweise die für den schnurlosen Anschluß von Kommunikationsendgeräten KE vorgesehene IPUI in eine GSM-Besucherregister-strukturierte Kennung zu konvertieren, wobei die IPUI einen Eintrag in der Besucher-Datenbasis BDB adressiert. Des weiteren ist eine Ergänzung der Heimat-Datenbasis HDB für die für Schnurlos-Anschlüsse vorgesehene Registrierung einschließlich der Subskriptionsdaten zu berücksichtigen, in die mit Hilfe der Interworking-Einheit IWU teilweise die Subskriptionsdaten eingetragen werden. Hierbei sind die Subskriptionsdaten IPUI, PARK und PLI mit den GSM-Struktur-gemäßen.zu korrelieren. Des weiteren sind Roaming-Informationen bei einem Wechsel der drahtlos angeschlossenen Kommunikationsendgeräten KE in andere Zubringernetze AN zu aktualisieren bzw. anzufordern. Die in den Leitungsanschlußeinheiten LTG programmtechnisch realisierte Interworking-Einheit IWU kommuniziert mit einem in der Vermittlungssteuerung CP programmtechnisch realisierten Kommunikationsmodul (KM), über das die Mobilitäts-Management-Informationen mmi übermittelt und in die bzw. aus der Besucher-Datenbasis BDB eingetragen bzw. gelesen werden. Die im Rahmen der Registrierung übermittelten Servicedaten, d.h. das Service-Profiles werden mit Hilfe einer Service-Mapping-Routine SMR konvertiert, d.h. auf die bekannte GSM-gemäße Datenstruktur abgebildet. Durch die Verwendung der GSM-gemäßen Datenstrukturen für Service Profils für drahtlos angeschlossene Kommunikationsendgeräte KE können die GSM-gemäßen Datenstrukturen mit geringstem zusätzlichen Aufwand eingesetzt werden. Die Service-Mapping-Routine SMR ist in der Kommunikationsroutine KM programmtechnisch realisiert. Für diese Service-Profiles ist in der Besucher-Datenbasis BDB ein Service-Bereich SB vorgesehen.

Die Besucher-Datenbasis BDB ist Teil einer Datenbasis DB der Kommunikationssysteme LE, die zusätzlich die üblicherweise vorhandene Datenbasis DBL für die leitungsgebundenen Kommunikationsendgeräte enthält. Die leitungsgebundenen Kommunikationsendgeräte sind beispielsweise öffentlichen Kommunikationsnetzen KN wie dem Fernsprechnetz PSTN oder dem dienstintegrierenden Kommunikationsnetz ISDN zugeordnet. Die Datenbasis DBL ist gemäß den ISDN-Standards bzw. PSTN-Standards strukturiert sowie die Service Profiles entsprechend eingetragen. Für die Übermittlung der Service-Profile-Informationen spi für leitungsbebundenen Kommunikationsendgeräte über die V.5-Schnittstelle V.5 sind die üblicherweise vorhandenen Routinen R vorgesehen, die im weiteren nicht erläutert sind, da sie zur Erläuterung der Erfindung nicht erforderlich sind.

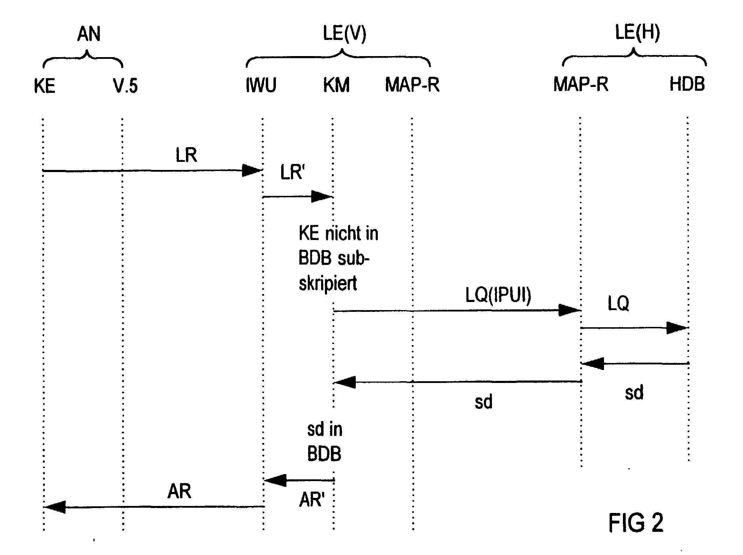

FIG 2 zeigt in einem annähernd sich selbst erläuternden Ablaufdiagramm eine Location-Registration-Prozedur, die von einem schnurlos angeschlossenen Kommunikationsendgerät KE in einem Zubringernetz AN eingeleitet, in dessen Besucher-Datenbasis BDB es nicht subskribiert ist, d.h. keine Subskriptionsdaten vorliegen.

Nach Empfang einer Location Registration- Information LR vom Zubringernetz AN wird diese an die Interworking-Einheit IWU in den Leitungsbaugruppen LTG weitergeleitet, in dieser an die Kommunikationssystem-interne Datenstruktur angepaßt und als konvertierte Location-Registration-Information LR' an das Kommunikationsmodul KM übermittelt. Mit Hilfe des Kommunikationsmoduls KM und der Vermittlungssteuerung CP wird überprüft, ob das die Location Registration initialisierende Kommunikationsendgerät KE in der Besucher-Datenbasis BDB subskribiert ist. Da das Kommunikationsendgerät KE nicht subskribiert ist, wird eine Übermittlung einer Location Request-Meldung LQ zu einem Kommunikationssystem LE(H) mit einer Heimat-Datenbasis (HDB) eingeleitet. Die mit einer IPUI-Meldung adressierte Location Request-Meldung LQ wird mit Hilfe der Mobilitäts-Routine MAP-R gebildet und an das Kommunikationssystem LE(H) übermittelt, in welcher es durch die gleichartig realisiert Mobilitäts-Routine MAP-R empfangen und an die Heimat-Datenbasis HDB weitergeleitet wird. Aus dieser werden die Subskriptionsdaten sd gelesen und mit Hilfe der Mobilitäts-Routine MAP-R an die Mobilitäts-Routine MAP-R des Kommunikationssystems LE(H) mit der Besucher-Datenbasis BDB übermittelt. Die an das Kommunikationsmodul KM übermittelten Subskriptionsdaten sd werden mit dessen Hilfe in die Besucher-Datenbasis BDB eingetragen. Anschließend wird mit Hilfe der Vermittlungssteuerung CP Kommunikationssystem-formatge recht eine Authentisierungs-Request-Meldung AR' gebildet, an die Interworking-Einheit IWU übermittelt, dort in eine Mobilitäts-Management-Informationen-gerechte Authentisierungs-Request-Meldung AR an das Zubringernetz AN bzw. das betroffene Kommunikationsendgerät KE übermittelt. Die Authentisierungsprozedur - in FIG 2 nicht dargestellt - wird mit den mit der Authentisierungs-Request-Meldung AR enthaltenen bzw. mitübermittelten, aktualisierten und in der Besucher-Datenbasis BDB gespeicherten Subskriptionsdaten sd durchgeführt.

Für die Ermittlung der Heimat-Datenbasis HDB sind in der Besucher-Datenbasis BDB Hinweise - insbesondere Adresseninformationen, mit deren Hilfe die Location-Request-Meldung von der jeweiligen Besucher-Datenbasis BDB an die zugeordnete Heimat-Datenbasis HDB vermittelt wird.

Die Service-Mapping-Routine SMR ist insbesondere für Verbindungsaufbauten von Kommunikationsendgeräten des leitungsgebundenen Kommunikationsnetzes KN - beispielsweise ISDN-Kommunikationsendgeräte - vorgesehen. Hierbei werden die im Format und Struktur des leitungsbebundenen Kommunikationsnetzes KN übermittelten Service Profiles mit Hilfe der Service-Mapping-Routine SMR auf GSM-strukturierte Service Profiles abgebildet und in dem vorgesehenen Bereich der Besucher-Datenbasis BDB gespeichert - nicht dargestellt.

## Patentansprüche

1. Verfahren zur Integration von Mobilitäts-Management-Funktionen für einen schnurlosen Anschluß von mobilen Kommunikationsendgeräten (KE) in einem durch leitungsgebundene Kommunikationssysteme (LE) gebildetes Kommunikationsnetz (KN),
- bei dem in leitungsgebundenen Kommunikationssystemen (LE) vorgesehene Besucher- und/oder Heimat-Datenbasen (BDB,HDB) Mobilitäts-Management-Informationen (mmi) zumindest temporär gespeichert sind, wobei die Datenbasen (DBL, BDB, HDB) für leitungsgebundene und schnurlose Kommunikationsendgeräte (KE) eine unterschiedliche Struktur aufweisen,
- bei dem Mobilitätsmanagement-Informationen (mmi) zwischen in unterschiedlichen Kommunikationssystemen (LE(H,V)) vorgesehenen Besucher- bzw. Heimat-Datenbasen (BDB,HDB) mit Hilfe eines Mobil-Protokolls (MAP) ausgetauscht werden, wobei ein Kommunikationsnetz-Signalisierungs-Protokoll (Nr.7) um das Mobil-Protokoll (MAP) erweitert ist,
- bei dem in den leitungsgebundenen Kommunikationssystemen (LE(H,V)) die von den schnurlos angeschlossenen Kommunikationsendgeräten (KE) übermittelten Mobilitäts-Management-Informationen (mmi) selektiert und diese bzw. die Mobilitäts-Informationen der Heimat- bzw. Besucher-Datenbasis (HDB,BDB) mit Hilfe einer Interworking-Einheit (IWU) an die Besucher- bwz. Heimat-Datenbasis (BDB, HDB) bzw. die Vermittlungssteuerung (CP) übermittelt werden, wobei eine Anpassung der Mobilitäts-Management-Informationen (mmi) hinsichtlich der Heimat- bzw. Besucher-Datenbasis-Architektur in der Interworking-Einheit (IWU) erfolgt, und
- bei dem in den leitungsgebundenen Kommunikationssystemen (LE(H,V)) vorgesehene Service-Profiles der Besucher- bzw. Heimat-Datenbasis (BDB,HDB) Mobil-Service-Profilestrukturiert dargestellt werden.

2. Verfahren nach Anspruch 1, **dadurch gekennzeichnet, daß** die Heimat- und Besucher-Datenbasis (HDB,BDB) und die zu speichernden Mobilitäts-Management-Informationen (mmi) gemäß dem GSM-Standard strukturiert sind, wobei eine Anpassung der Heimat- und Besucher-Datenbasis (BDB,HDB) für zusätzliche schnurlos-spezifische Mobilitäts-Management-Informationen (mmi) vorgesehen ist.

3. Verfahren nach Anspruch 1 oder 2, **dadurch gekennzeichnet, daß** bei Verkehrsbeziehungen mit leitungsgebundenen Kommunikationsendgeräten des leitungsgebundenen Kommunikationsnetzes (KN) die übermittelten Service Profiles der Heimat- bzw. Besucher-Datenbasis (BDB,HDB) in GSM-gemäßer Service-Profile-Struktur dargestellt bzw. zumindest temporär gespeichert werden.

4. Verfahren nach einem der Ansprüche 1 bis 3, **dadurch gekennzeichnet, daß** das Kommunikationsnetz-Signalisierungs-Protokoll gemäß dem standardisierten Nr.7-Signalisierungs-Protokoll und das Mobil-Protokoll nach dem GSM-gemäßen Mobil-Applications-Protokoll (MAP) realisiert ist.

5. Verfahren nach einem der Ansprüche 1 bis 4, **dadurch gekennzeichnet, daß** die Mobilitäts-Management-Informationen (mmi) gemäß einem zwischen Kommunikationssystemen (LE) und einem Zubringernetz (AN) des leitungsgebundenen Kommunikationsnetzes (KN) abgestimmten Mobilitäts-Management-Protokoll gebildet und übermittelt werden.

6. Verfahren nach einem der Ansprüche 1 bis 5, **dadurch gekennzeichnet, daß** in der Heimat- bzw. Besucher-Datenbasis (BDB,HDB) zumindest ein Teil von Subskriptions-Informationen (sd) sowie Service-Profiles und Session Key-Informationen zumindest temporär gespeichert sind, wobei die Dauer der Speicherung in der Besucher-Datenbasis (BDB) von der Aufenthaltsdauer des jeweiligen, schnurlos angeschlossenen Kommunikationsendgerätes (KE) in dem dieser Besucher-Datenbasis (BDB) zugeordneten Service-Bereichs abhängt.

7. Verfahren nach einem der Ansprüche 1 bis 6, **dadurch gekennzeichnet, daß** in den leitungsgebundenen Kommunikationssystemen (LE(H,V)) vorgesehene Service-Profiles der Besucher- bzw. Heimat-Datenbasis (BDB, HDB) Mobil-Service-Profile-strukturiert dargestellt werden und umgekehrt.

8. Anordnung zur Integration von Mobilitäts-Management-Funktionen für einen schnurlosen Anschluß von mobilen Kommunikationsendgeräten (KE) in ein durch leitungsgebundene Kommunikationssysteme (LE) gebildetes Kommunikationsnetz (KN),
- mit in leitungsgebundenen Kommunikationssystemen (LE) vorgesehenen Besucher- und/oder Heimat-Datenbasen (BDB,HDB) zur zumindest temporären Speicherung von Mobilitäts-Management-Informationen (mmi), wobei die Datenbasen (DBL, BDB, HDB) für leitungsgebundene und schnurlose Kommunikationsendgeräte (KE) eine unterschiedliche Struktur aufweisen,
- mit einer Mobilitäts-Routine (MAP-R) zum Austausch von Mobilitäts-Management-Informationen (mmi) zwischen in unterschiedlichen Kommunikationssystemen (LE(H,V)) vorgesehenen Besucher- bzw. Heimat-Datenbasen (BDB,HDB),
- mit einer Übermittlungs-Routine (MTR) zum Selektieren von in den leitungsgebundenen Kommunikationssystemen (LE) und von den schnurlos angeschlossenen Kommunikationsendgeräten (KE) übermittelten Mobilitäts-Management-Informationen (mmi)
- mit einer Interworking-Einheit (IWU) zur Anpassung der Mobilitäts-Informationen-Struktur an die Architektur der Heimat- bzw. Besucher-Datenbasis (HDB,BDB), und
- mit einer Service-Mapping-Routine (SMR) zur Darstellung von in den drahtgebundenen Kommunikationssystemen (LE) vorgesehenen Kommunikationsnetz-Service-Profiles der Besucher- bzw. Heimat-Datenbasis (BDB,HDB) in Mobil-Service-Profile-Struktur.

9. Anordnung nach Anspruch 8, **dadurch gekennzeichnet, daß** die Heimat- bzw. Besucher-Datenbasis (BDB) in der Datenbasis (DB) der leitungsgebundenen Kommunikationssysteme (LE) integriert ist und daß ein Kommunikationsmodul (KM) zum Zugriff auf die Heimat- bzw. Besucher-Datenbasis (HDB,BDB) und zum Kommunikationsaustausch mit der Interworking-Einheit (IWU) sowie der Mobilitäts-Routine (MAP) vorgesehen ist.

10. Anordnung nach Anspruch 8 oder 9, **dadurch gekennzeichnet, daß** sie eine Service-Mapping-Routine (SMR) zur Darstellung von in den drahtgebundenen Kommunikationssystemen (LE) vorgesehenen Kommunikationsnetz-Service-Profiles der Besucher- bzw. Heimat-Datenbasis (BDB,HDB) in Mobil-Service-Profile-Struktur und umgekehrt aufweist.

## Claims

1. Method for integrating mobility management functions for a cordless connection of mobile communications terminals (KE) in a communications network (KN) formed by means of line-bound communications systems (LE),
- in which mobility management information (mmi) is stored at least temporarily in visitor and/or home databases (BDB, HDB) provided in line-bound communications systems (LE), the databases (DBL, BDB, HDB) having a different structure for line-bound and cordless communications terminals (KE),
- in which mobility management information (mmi) is exchanged, using a mobile protocol (MAP), between visitor and/or home databases (BDB, HDB) provided in different communications systems (LE (H,V)), a communications network signalling protocol (No. 7) being expanded by the mobile protocol (MAP),
- in which in the communications systems (LE (H,V)), the mobility management information (mmi) transmitted by the communications terminals (KE) which are connected in a cordless fashion is selected and this mobility information and/or the mobility information from the home and/or visitor databases (HDB, BDB) is transmitted to the visitor and/or home database (VLR, HLR) and/or the switching controller (CP) with the aid of an interworking unit (IWU), the mobility management information (mmi) being adapted in terms of the home and/or visitor database architecture in the interworking unit (IWU), and
- in which service profiles, provided in the line-bound communications systems (LE (H,V)), of the visitor and/or home database (BDB, HDB) are represented structured as mobile service profiles.

2. Method according to Claim 1, **characterized in that** the home and visitor database (HDB, BDB) and the mobility management information (mmi) to be stored are structured in accordance with the GSM standard, an adaptation of the home and visitor database (BDB, HDB) for additional cordless-specific mobility management information (mmi) being provided.

3. Method according to Claim 1 or 2, **characterized in that**, in the case of traffic connections to line-bound communications terminals of the line-bound communications network (KN), the transmitted service profiles of the home and/or visitor database (BDB, HDB) are represented, and/or stored at least temporarily, with a GSM-compatible service profile structure.

4. Method according to one of Claims 1 to 3, **characterized in that** the communications network signalling protocol is implemented in accordance with the standardized No. 7 signalling protocol, and the mobile protocol is implemented according to the GSM-compatible mobile applications protocol (MAP).

5. Method according to one of Claims 1 to 4, **characterized in that** the mobility management information (mmi) is formed and transmitted in accordance with a mobility management protocol agreed between communications systems (LE) and a feed network (AN) of the line-bound communications network (KN).

6. Method according to one of Claims 1 to 5, **characterized in that** at least part of the subscription information (sd), service profiles and session key information are stored at least temporarily in the home and/or visitor database (BDB, HDB), the duration of the storage in the visitor database (BDB) depending on the residence time of the respective communications terminal (KE), connected in a cordless fashion, in the service area assigned to this visitor database (BDB).

7. Method according to one of Claims 1 to 6, **characterized in that** service profiles, provided in the line-bound communications systems (LE (H,V)), of the visitor and/or home database (BDB, HDB) are represented structured as mobile service profiles, and vice versa.

8. Arrangement for integrating mobility management functions for a cordless connection of mobile communications terminals (KE) in a communications network (KN) formed by means of line-bound communications systems (LE),
- with visitor and/or home databases (BDB, HDB), provided in line-bound communications systems (LE), for at least temporary storing mobility management information (mmi), wherein the databases (DBL, BDB, HDB) have a different structure for line-bound and cordless communications terminals (KE),
- with a mobility routine (MAP-R) for exchanging mobility management information (mmi) between visitor and/or home databases (BDB, HDB) provided in different communications systems (LE (H,V)),
- with a transmission routine (MTR) for selecting mobility management information (mmi) transmitted in the line-bound communications systems (LE) and by the communications terminals (KE) which are connected in a cordless fashion,
- with an interworking unit (IWU) for adapting the mobility information structure to the architecture of the home and/or visitor database (HDB, BDB), and
- with a service mapping routine (SMR) for representing communications network service profiles, provided in the wire-bound communications systems (LB), of the visitor and/or home database (BDB, HDB) with a mobile service profile structure.

9. Arrangement according to Claim 8, **characterized in that** the home and/or visitor database (BDB) is integrated in the database (DB) of the line-bound communications systems (LE), and **in that** a communications module (KM) is provided for accessing the home and/or visitor database (HDB, BDB) and for exchanging communications with the interworking unit (IWU) and with the mobility routine (MAP).

10. Arrangement according to Claim 8 or 9, **characterized in that** it has a service mapping routine (SMR) for representing communications network service profiles, provided in the wire-bound communications systems (LE), of the visitor and/or home database (BDB, HDB) with a mobile service profile structure, and vice versa.

## Revendications

1. Procédé d'intégration de fonctions de gestion de mobilité pour une connexion sans fil de terminaux de communication mobiles (KE) dans un réseau de communication (KN) formé par des systèmes de communication par ligne (LE),
- selon lequel des informations de gestion de mobilité (mmi) sont mémorisées au moins temporairement dans des bases de données visitée et/ou nominale (BDB, HDB) prévues dans des systèmes de communication par ligne (LE), les bases de données (DBL, BDB, HDB) ayant une structure différente pour des terminaux de communication (KE) raccordés par ligne et pour ceux raccordés sans fil,
- selon lequel des informations de gestion de mobilité (mmi) sont échangées entre des bases de données visitée ou nominale (BDB, HDB) prévues dans différents systèmes de communication (LE(H,V)) à l'aide d'un protocole mobile (MAP), un protocole de signalisation de réseau de communication (n°7) étant complété par le protocole mobile (MAP),
- selon lequel, dans les systèmes de communication par ligne (LE(H,V)), on sélectionne les informations de gestion de mobilité (mmi) transmises par les terminaux de communication raccordés sans fil (KE) et on transmet celles-ci resp. les informations de mobilité de la base de données nominale ou visitée (HDB,BDB) à l'aide d'une unité passerelle (IWU) à la base de données visitée ou nominale (BDB, HDB) ou à la commande de commutation (CP), une adaptation des informations de gestion de mobilité (mmi) du point de vue de l'architecture de la base de données nominale ou visitée s'effectuant dans l'unité passerelle (IWU) et
- selon lequel des profils de service, prévus dans les systèmes de communication par ligne (LE(H,V)), de la base de données visitée ou nominale (BDB, HDB) sont représentés structurés sous forme de profils de service mobiles.

2. Procédé selon la revendication 1, **caractérisé en ce que** les bases de données nominale et visitée (HDB, BDB) et les informations de gestion de mobilité (mmi) à mémoriser sont structurées selon le standard GSM, une adaptation des bases de données nominale et visitée (HDB, BDB) pour des informations de gestion de mobilité (mmi) supplémentaires spécifiques à la connexion sans fil étant prévue.

3. Procédé selon la revendication 1 ou 2, **caractérisé en ce que**, lors de relations d'échange avec des terminaux de communication raccordés par ligne du réseau de communication raccordé par ligne (KN), les profils de service transmis de la base de données nominale ou visitée (HDB, BDB) sont représentés resp. mémorisés au moins temporairement avec une structure de profils de service GSM.

4. Procédé selon l'une des revendications 1 à 3, **caractérisé en ce que** le protocole de signalisation de réseau de communication est réalisé selon le protocole de signalisation n°7 standard et le protocole mobile selon le Mobile-Application-Protocol (MAP) GSM.

5. Procédé selon l'une des revendications 1 à 4, **caractérisé en ce que** les informations de gestion de mobilité (mmi) sont formées et transmises selon un protocole de gestion de mobilité convenu entre des systèmes de communication (LE) et un réseau d'arrivée (AN) du réseau de communication raccordé par ligne (KN).

6. Procédé selon l'une des revendications 1 à 5, **caractérisé en ce qu'**au moins une partie des informations d'abonnement (sd) ainsi que des profils de service et des informations d'identification de session sont mémorisés au moins temporairement dans la base de données nominale ou visitée (HDB, BDB), la durée de la mémorisation dans la base de données visitée (BDB) dépendant de la durée de séjour du terminal de communication raccordé sans fil (KE) respectif dans la zone de service associée à cette base de données visitée (BDB).

7. Procédé selon l'une des revendications 1 à 6, **caractérisé en ce que** des profils de service, prévus dans les systèmes de communication par ligne (LE(H,V)), de la base de données visitée ou nominale (BDB, HDB) sont représentés structurés sous forme de profils de service mobiles et inversement.

8. Dispositif d'intégration de fonctions de gestion de mobilité pour une connexion sans fil de terminaux de communication mobiles (KE) dans un réseau de communication (KN) formé par des systèmes de communication par ligne (LE),
- avec des bases de données visitée et/ou nominale (BDB, HDB) prévues dans des systèmes de communication par ligne (LE) pour la mémorisation au moins temporaire d'informations de gestion de mobilité (mmi), les bases de données (DBL, BDB, HDB) ayant une structure différente pour des terminaux de communication (KE) raccordés par ligne et pour ceux raccordés sans fil,
- avec une routine de mobilité (MAP-R) pour l'échange d'informations de gestion de mobilité (mmi) entre des bases de données visitée ou nominale (BDB, HDB) prévues dans différents systèmes de communication (LE(H,V)),
- avec une routine de transmission (MTR) pour la sélection d'informations de gestion de mobilité (mmi) transmises dans les systèmes de communication par ligne (LE) et par les terminaux de communication raccordés sans fil (KE),
- avec une unité passerelle (IWU) pour l'adaptation de la structure d'informations de mobilité à l'architecture de la base de données nominale ou visitée (HDB, BDB) et
- avec une routine de cartographie (SMR) pour la représentation de profils de service de réseau de communication, prévus dans les systèmes de communication par ligne (LE), de la base de données visitée ou nominale (BDB, HDB) sous forme de structure de profils de service mobiles.

9. Dispositif selon la revendication 8, **caractérisé en ce que** la base de données nominale ou visitée (BDB) est intégrée dans la base de données (DB) des systèmes de communication par ligne (LE) et qu'un module de communication (KM) est prévu pour l'accès à la base de données nominale ou visitée (HDB, BDB) et pour l'échange de communication avec l'unité passerelle (IWU) ainsi qu'avec la routine de mobilité (MAP).

10. Dispositif selon la revendication 8 ou 9, **caractérisé en ce qu'**il comporte une routine de cartographie (SMR) pour la représentation de profils de service de réseau de communication, prévus dans les systèmes de communication par ligne (LE), de la base de données visitée ou nominale (BDB, HDB) sous forme de structure de profils de service mobiles et inversement.
